# EUROPEAN PATENT SPECIFICATION

(11) **EP 2 596 033 B1**
(45) Date of publication and mention of the grant of the patent: **14.05.2014**
(21) Application number: 11738894.2
(22) Date of filing: 13.07.2011
(51) Int. Cl.: C09D 131/04, D21H 19/56, D21H 19/58, D21H 19/60, C08F 218/08

(54) **VINYL ESTER/ETHYLENE-BASED BINDERS FOR PAPER AND PAPERBOARD COATINGS**
VINYLESTER/ETHYLEN-BASIERTE BINDER FÜR PAPIER- UND KARTONBESCHICHTUNGEN
LIANTS À BASE D'ESTER VINYLIQUE/ÉTHYLÈNE POUR COUCHAGES DE PAPIER ET DE CARTON

(30) Priority: 20.07.2010 US 839662
(43) Date of publication of application: 29.05.2013
(73) Proprietor: Celanese International Corporation, Irving, TX 75039 (US)
(72) Inventor: CONFALONE, Philip, Raritan NJ 08869 (US); FARWAHA, Rajeev, Belle Mead NJ 08502 (US); GOHR, Kerstin, D-65239 Hessen (DE)
(74) Representative: Serravalle, Marco
(86) International application number: PCT/US2011/043792
(87) International publication number: WO 2012/012231

(56) References cited:
- EP-A1- 0 316 090
- EP-A1- 2 017 313
- EP-A2- 0 140 227
- US-A- 4 657 821

## Description

### Field of the Invention

The present invention relates to aqueous, surfactant-stabilized, vinyl ester/ethylene-based emulsion interpolymers demonstrating enhanced dry pick strength when used in paper coating formulations.

### Background of the Invention

Pigmented paper coating formulations generally comprise an aqueous synthetic polymer binder emulsion and pigment and may contain other additives typically used in the paper coating art. Illustrative of the polymer binders in the emulsions are vinyl acetate copolymers and interpolymers, including vinyl acetate/ethylene and vinyl acetate/alkyl acrylate copolymers and interpolymers, and styrene/butadiene styrene/acrylate copolymers. Such copolymers and interpolymers can also contain other co-monomers such as, for example, a copolymerized ethylenically unsaturated mono- or dicarboxylic acid or other unsaturated co-monomers which can function as cross-linking agents.

U.S. Patent No. 4,395,499, for example, discloses high strength pigment binders for paper coating having increased water retention and stability. The coating compositions contain an aqueous synthetic polymer latex comprising a dispersed interpolymer of a vinyl ester; a polyethylenically unsaturated co-monomer which can be triallyl cyanurate, triallyl isocyanurate, diallyl maleate, diallyl fumarate, divinyl benzene or diallyl phthalate; an ethylenically unsaturated mono- or dicarboxylic acid co-monomer or half ester thereof; and optionally an alkyl acrylate co-monomer.

Notwithstanding the availability of these various types of paper coating binder emulsions, there is a persistent need for coated paper and coated paperbord producers to identify paper coating emulsions (i.e., paper coating binders) which provide, when used in paper coating compositions, increased binding strength when the compositions are applied to paper and paperboard products. Most often, binding strength is quantified by a paper test called the IGT pick resistance test. In this IGT pick test, the higher the IGT value, the stronger the binder and vice versa.

The prior art has shown that a variety of emulsion polymerization components and techniques can influence binding strength, but, in general, vinyl acetate-based binders (e.g., polyvinyl acetate, vinyl acetate-ethylene, vinyl acetate-acrylate, and the vinyl acetate-based binders discussed above) are known to provide lower binding strength than more commonly used coating binders like styrene butadiene and styrene acrylate. To compensate for the lower IGT pick resistance provided by paper coating compositions using such vinyl ester based binders, higher binder levels are required, and this, of course, hurts the profitability of the coated paper and paperboard products made with these types of coating binders.

Over the years, a few vinyl acetate/ethylene (VAE) copolymers and interpolymers have been developed for paper coating applications. U.S. Patent No. 3,337,482, for example, discloses paper coating compositions containing pigments and binder emulsions comprising copolymers of ethylene, vinyl acetate and ethylenically unsaturated mono- or di-carboxylic acids such as acrylic acid or maleic acid. The binder emulsions of the '482 patent are prepared by emulsion polymerization of the co-monomers using a nonionic emulsifier which contains polyoxyethylene oleyl or lauryl phenyl ethers.

EP 0316090 discloses paper coating compositions comprising an aqueous polymer binder emulsion, containing at least 40 % by weight of vinyl C1 to C13 alkanoate. The latex binder is prepared using at least one unsaturated surfactant.

EP 0140227 discloses high strength pigment binders for paper coating, comprising a polymer latex containing: an interpolymer of a C1-C13 vinyl ester of an alkanoic acid, preferably interpolymerized with from 0 to 30% by weight of ethylene; an organofunctional silane; at least one of an ethylenically unsaturated mono- or dicarboxylic acid or half ester thereof of said dicarboxylic acid and/or an amide of an olefinically unsaturated carboxylic acid; from 0 to 1 parts per 100 parts of other polymerizable comonomers selected from the group consisting of triallyl cyanurate, triallyl isocyanurate, diallyl maleate, diallyl fumarate, divinyl benzene, and diallyl phthalate. The emulsifying agent used in the polymerization can be of any of the nonionic or anionic oil-in-water surface active agents or mixtures thereof generally employed in emulsion polymerization procedures.

US 4657821 discloses a paper coating composition, which comprises a pigment and a copolymer emulsion prepared by polymerizing a monomer mixture containing: 5 to 40 wt % of an alpha -olefin; 30 to 90 wt % of a vinyl ester of an alkyl group having 1 to 18 carbon atoms; 1 to 30 wt % of at least one unsaturated carboxylic acid ester; and 0.1 to 10 wt % of an unsaturated carboxylic acid.

EP 2017313 discloses a coating agent comprising a pigment and/or a filler and a multi-stage polyvinylester dispersion obtained by polymerization of a vinylester of a saturated carboxylic acid and optionally further monomers copolymerizable by it in the presence of at least one emulsifying agent and/or at least a protective colloid.

Over the years, the most effective nonionic emulsifiers found to stablilze emusions of VAE copolymers belong to a general class of nonionic surfactants called alkylphenol ethoxylates (APEs). APEs have been typically used in VAE latex products to improve emulsion polymerization and film forming, and in coating formulations to provide pigment wetting. However, these APE compounds are believed to break down in the environment into related compounds that are persistent in the environment and act as endocrine disruptors. Due in part to regulations in Europe, as well as recently adopted water quality criteria in the United States, the evolving environmental controls on APEs are reminiscent of the 1970s ban on lead compounds in paint. Given this adverse regulatory situation, the use of APE-type nonionic emulsifiers in VAE emulsion-containing products is increasingly viewed as disadvantageous.

In light of the developing need to address potential problems with utilizing phenol free-emulsifiers in place of the heretofore more conventionally used APEs, and in further view of the need to overcome issues associated with handling ethylene gas on a large scale basis, the use of VAE-based paper coating composiions has not to date been all that commercially significant. Other issues including possible lack of FDA compliance and/or relatively high Volatile Organic Compound (VOC) content have also worked against the commercial use of VAE-based coating compositions.

More recently, however, the equipment and expertise has been developed to polymerize and stabilize environmentally-friendly vinyl ester/ethylene, e.g. vinyl actetate/ethylene (VAE), coating binders very easily on a commercial production scale. Accordingly, the current state of the emulsion polymerization art with respect to surfactant-stabilized, APE-free, vinyl ester/ethylene copolymers and interpolymers make such polymeric materials very desirable candidates for paper/paperboard coating applications. Such commercial potential for VAE-based products can be realized if the binding strength exhibited by such VAE-type binders can be made comparable to the binding strength of non-vinyl ester-based binders such as those based on styrene butadiene and styrene acrylate.

It has been found that, by selecting certain types and relative amounts of co-monomers and APE-free stabilizing surfactants, especially desirable vinyl ester/ethylene type latex binders can be prepared. Such latex binders are desirable because they can be used to provide especially effective and environmentally friendly coating compositions for paper and paperboard.

### Summary of the Invention

In one aspect, the present invention is directed to a surfactant-stabilized latex emulsion suitable for use as a binder in a paper coating composition. Such a latex emulsion comprises a vinyl ester-based interpolymer colloidally dispersed in an aqueous medium. The interpolymer is stabilized within the latex emulsion by anionic and/or nonionic emulsifiers which are substantially free of alkylphenol ethoxylate (APE) surfactants.

The interpolymer in the latex emulsion comprises (a) from 73.5 to 87.85 parts per hundred total monomers (pphm) of a vinyl ester of an alkanoic acid having 1 to 13 carbon atoms interpolymerized with the certain selected co-monomers. These co-monomers can include: (b) from 12 to 25 pphm of ethylene; (c) from 0.1 to 1.0 pphm of an ethylenically unsaturated C₃ -C₁₀ mono- or di-carboxylic acid or half ester of such di-carboxylic acid with a C₁ -C₁₈ alkanol; and (d) from 0.05 to 0.5 pphm of a polyethylenically unsaturated co-monomer (cross-linker) selected from the group consisting of triallyl cyanurate, triallyl isocyanurate, diallyl maleate, diallyl fumarate, divinyl benzene and diallyl phthalate. Preferably, the vinyl ester of the interpolymer is vinyl acetate, the unsaturated carboxylic acid-based co-monomer is maleic acid or maleic anhydride, and the polyethylenically unsaturated co-monomer (cross-linker) material is diallyl phthalate.

In another aspect, the present invention is directed to a pigmented paper coating composition comprising an aqueous, surfactant-stabilized, interpolymer latex binder, pigment and sufficient alkali to achieve a pH of 6 to 10. The aqueous surfactant-stabilized, interpolymer latex binder in the paper coating composition comprises the same latex binder emulsion hereinbefore described.

In yet another aspect, the present invention is directed to a pigmented paper coating composition which also comprises an aqueous, surfactant-stabilized, interpolymer latex binder, pigment and sufficient alkali to achieve a pH of 6. In this coating composition, the interpolymer of the latex binder comprises a major amount of a vinyl ester and minor amounts of the ethylene, unsaturated mono- or di-carboxylic acid, and polyethylenically unsaturated co-monomers as described above. These several types of co-monomers are present in the interpolymer in amounts relative to each other which serve to impart to the paper coating composition an IGT Dry Pick Value (as defined hereinafter) of at least 75.

### Detailed Description of the Invention

There are provided herein aqueous, surfactant-stabilized, interpolymer latex binder emulsions which demonstrate superior dry pick strength when such binder emulsions are incorporated into coating compositions for paper products. Such latex binder emulsions contain an interpolymer comprising a vinyl ester co-monomer which has been copolymerized with a selected amount of ethylene, a selected amount of a certain type of ethylenically unsaturated carboxylic acid-based co-monomer, and also a selected amount of a certain type of polyethylenically unsaturated co-monomer.

The vinyl esters utilized in the formation of the interpolymer of the latex binder emulsions herein are the esters of alkanoic acids, the acid having from one to 13 carbon atoms. Typical examples include; vinyl formate, vinyl acetate, vinyl propionate, vinyl butyrate, vinyl isobutyrate, vinyl valerate, vinyl-2-ethyl-hexanoate, vinyl isooctanoate, vinyl nonate, vinyl decanoate, vinyl pivalate, vinyl versatate, etc. Of the foregoing, vinyl acetate is the preferred monomer because of its ready availability and low cost.

The vinyl ester is present in the interpolymer of the binder latex emulsion in amounts ranging from 73.5 pphm to 87.85 pphm (parts per hundred based on total monomers in the interpolymer). More preferably, the vinyl ester content of the interpolymer used in the binder latex emulsion of the paper coating compositions herein will range from 78 pphm to 85 pphm.

The second major component of the interpolymer formed in the binder latex is ethylene. A relatively high ethylene content in the interpolymers herein is needed in order to provide binder latex emulsions which are especially effective in formulating coating compositions that provide desirably high binding strength. Thus, ethylene will generally comprise from 12 pphm to 25 pphm. More preferably, ethylene will be present in the interpolymer in amounts ranging from 18 pphm to 22 pphm.

The third component of the interpolymer in the binder latex comprises a co-monomer selected from α,β-ethylenically unsaturated C₃-C₁₀ mono-carboxylic acids, α,β-ethytenically unsaturated C₄ -C₁₀ di-carboxylic acids and the anhydrides thereof, and the C₁ -C₁₈ alkyl half-esters of the α,β-ethylenically unsaturated C₄-C₁₀ di-carboxylic acids. Exemplary co-monomers of this type include acrylic acid and methacrylic acid, maleic acid, maleic anhydride, fumaric acid, itaconic acid and the C₄ -C₈ alkyl half esters of maleic acid. Maleic acid and maleic anhydride are the preferred co-monomers of this type.

The foregoing unsaturated carboxylic acid-based co-monomers are also generally present in the interpolymers of the binder latex emulsions herein in certain selected amounts which serve to impart the desirable binder strength to paper coating composition containing such emulsions. In particular, this type of unsaturated carboxylic acid based co-monomer will generally be present in the interpolymer in amounts of from 0.1 pphm to 1.0 pphm. More preferably, such carboxylic acid-based co-monomers will be used in amounts of 0.2 pphm to 0.5 pphm.

A fourth type of co-monomer which is used as one of the constituent co-monomers (i.e., a cross-linker) of the interpolymers herein comprises a polyethylenically unsaturated co-monomer selected from the group consisting of triallyl cyanurate, triallyl isocyanurate, diallyl maleate, diallyl fumarate, divinyl benzene and diallyl phthalate. Preferred co-monomers of this type included diallyl maleate, diallyl fumarate and diallyl phthalate. This type of polyethylenically unsaturated co-monomer will be generally present in the interpolymer in amounts of from 0.05 pphm to 0.5 pphm. More preferably, such polyethylenically unsaturated co-monomer(s)/cross-linker(s) will be used in amounts of from 0.1 pphm to 0.3 pphm.

As noted, the interpolymers used to form the binder latex emulsions of the paper coating compositions herein are made by copolymerizing a vinyl ester with ethylene, the unsaturated mono- or di-carboxylic co-monomers and the polyethylenically unsaturated co-monomer. Preferably, these several types of co-monomers will be present in the interpolymer in amounts relative to each other which serve to impart to the paper coating compositions as hereinafter described an IGT Dry Pick Value (also as defined hereinafter) of at least about 75. Even more preferably, the relative amounts of the co-monomers in the interpolymer will be such that a paper coating composition containing the interpolymer-based latex emulsion, as hereinafter defined, will exhibit a Dry Pick Value of at least 90, or even at least 100.

The interpolymer comprising the essential co-monomers hereinbefore described can be prepared using conventional emulsion polymerization procedures which result in the preparation of binder latex emulsions for paper coating compositions. Such procedures are described in general, for example, in U.S. Patent No. 5,849,389.

In a typical polymerization procedure, the vinyl ester, ethylene, and other co-monomers can be polymerized in an aqueous medium under pressures not exceeding 100 atmospheres in the presence of a catalyst and at least one emulsifying agent. The aqueous system can be maintained by a suitable buffering agent at a pH of 2 to 6, with the catalyst being added incrementally or continuously. More specifically, vinyl acetate and 50% to 75% of the other co-monomers can be suspended in water and thoroughly agitated in the presence of ethylene under the working pressure to effect solution of the ethylene in the mixture up to the substantial limit of its solubility under the conditions existing in the reaction zone. The vinyl acetate and other-co-monomers can then be gradually heated to polymerization temperature.

The homogenization period is generally followed by a polymerization period during which the catalyst, which consists of a main catalyst or initiator, and may include an activator, is added incrementally or continuously together with the remaining co-monomers. The monomers employed may be added either as pure monomers or as a premixed emulsion.

Suitable polymerization catalysts include the water-soluble free-radical-formers generally used in emulsion polymerization, such as hydrogen peroxide, sodium persulfate, potassium persulfate and ammonium persulfate, as well as tert-butyl hydroperoxide, in amounts of between 0.01% and 3% by weight, preferably 0.01% and 1% by weight based on the total amount of the emulsion. They can be used together with reducing agents such as sodium formaldehyde-sulfoxylate, ferrous salts, sodium dithionite, sodium hydrogen sulfite, sodium sulfite, sodium thiosulfate, as redox catalysts in amounts of 0.01% to 3% by weight, preferably 0.01% to 1% by weight, based on the total amount of the emulsion. The free-radical-formers can be charged in the aqueous emulsifier solution or can be added during the polymerization in doses.

The manner of combining the polymerization ingredients can be by various known monomer feed methods, such as, continuous monomer addition, incremental monomer addition, or addition in a single charge of the entire amounts of monomers. The entire amount of the aqueous medium with polymerization additives can be present in the polymerization vessel before introduction of the monomers, or alternatively, the aqueous medium, or a portion of it, can be added continuously or incrementally during the course of the polymerization.

The emulsion polymerization used to prepare the interpolymer in aqueous latex form is carried out in the presence of a stabilization system which comprises one or more of certain types of anionic and/or nonionic surfactants as emulsifiers. Such emulsifiers are conventional and well known.

Suitable nonionic surfactants which can be used as emulsifiers in the emulsion stabilizing system of the coating compositions herein include polyoxyethylene condensates. A wide variety of nonionic surfactants of this type are disclosed in the hereinbefore-referenced U.S. Patent No. 5,849,389. As noted above, however, such ethoxylated nonionic surfactants used to stabilize the binder emulsions of the present invention cannot include ethoxylated nonionics based on alkyl phenols.

The binder emulsions and coating compositions herein must, in fact, be substantially free of alkylphenol ethoxylates (APEs). For purposes of this invention, such emulsions and coating compositions are considered to be substantially free of APEs if they contain less than 500 ppm of alkylphenol ethoxylates.

Suitable anionic surfactants which can be used as emulsifiers in the binder latex components of the paper coating compositions herein include alkyl aryl sulfonates, alkali metal alkyl sulfates, sulfonated alkyl esters and fatty acid soaps. A wide variety of anionic surfactants of this type are also disclosed in the hereinbefore-referenced U.S. Patent No. 5,849,389.

Following polymerization, the solids content of the resulting aqueous polymer emulsion binder can be adjusted to the level desired by the addition of water or by the removal of water by distillation. Generally, the desired level of polymeric solids content is from 40 weight percent to 70 weight percent based on the total weight of the emulsion, more preferably from 50 weight percent to 60 weight percent.

The particle size of the latex can be regulated by the quantity of non-ionic or anionic emulsifying agent or agents employed. To obtain smaller particles sizes, greater amounts of emulsifying agents are used. As a general rule, the greater the amount of the emulsifying agent employed, the smaller the average particle size.

The actual paper coating compositions herein comprise the interpolymer latex together with a pigment, such as clay and/or calcium carbonate, and the usual paper coating additives which may include other co-binders, such as polyvinyl alcohol, protein, e.g. casein or soy protein, or starch, as is well known to those skilled in the art. The coating compositions herein will also contain sufficient alkali to maintain the pH of the coating composition between 6 and 10, more preferably between 7 and 9,

The pigment used in the paper coating compositions herein may be any of those conventionally employed. Frequently, some or all of the pigment comprises clay and for this portion any of the clays customarily used for paper coating, including the hydrous aluminium silicates of kaolin group clays, hydrated silica clays, and the specific types of clays recommended in Chapters 10-16 of "Kaolin Clays and their Industrial Uses," by J. M. Huber Corp. (1949), New York, N.Y.

In addition to clay itself, or as a complete replacement for clay, there may also be utilized other paper pigments such as, for example, calcium carbonate, titanium dioxide, blanc fixe, lithopone, zinc sulfide, or other coating pigments including plastics, for example polystyrene. When used with clay, the other pigments can be present in various ratios, e.g. up to 50%, preferably up to 35%, by weight of the clay. Additionally, the composition may also contain other additives such as zinc oxide and/or a small amount, of a dispersing or stabilizing agent such as tetrasodium pyrophosphate.

In general, the paper coating compositions herein can comprise 100 parts pigment, e.g., pigments which comprise 65-100 parts clay and 0-35 parts secondary pigment; 0.01-0.5 parts dispersing or stabilizing agent; 3-30 parts interpolymer latex (solids basis); 0-25 parts cobinder; optionally 0.0.2 parts defoamer; and sufficient water to provide the desired level of solids. Coating compositions containing from 40 wt% to 70 wt% solids are typical. The modification and formulation of the coating color using these materials will be within the knowledge of those skilled in the art.

The paper coating compositions herein may be applied to various substrates including paper such as freesheet and groundwood grades; paper board; labels; paper products used for newspapers, advertisements, poster, books or magazines; and building substrates such as wall paper, wall board, or ceiling tile. In one embodiment, the paper coating composition can be used to coat paper intended for rotogravure printing.

The amount of the paper coating composition applied to the substrate is generally in the range of 1 g/m² to 30 g/m², and preferably in the range of 3 g/m² to 12 g/m². The paper coating composition may be applied in a single step or by using two or more steps to build the final coat weight. Further, the paper coating composition may also be applied to the second side of the substrate either simultaneously or as a separate coating step.

The paper coating composition may be applied to the substrate by techniques well known to those in the art. For example, the paper coating composition may be applied with a roll applicator such as a metered size press; a blade coater such as a short dwell time applicator; air knife coater; slot die coater such as a jet applicator; or brush. Preferred coating methods for high speed application include the use of a blade coater or a metered size press.

The paper coating compositions of the present invention, which contain the particular vinyl ester-based binder latex emulsions described herein, provide improved binding strength when applied as coating to paper substrates of the type described above. This improved binding peformance can be quantifed by means of a parameter called dry pick strength, and in particular by means of a parameter called Dry Pick Value as specifically defined hereinafter.

Picking is defined as the lifting of a coating, film or fibers from the surface of the base paper during printing. When a print wheel makes contact with a paper sample to deposit the ink, then subsequent negative forces are exerted on the paper as the inked print wheel is removed from the paper surface. The dry pick strength of the coated paper is measured with a method that consists of printing a strip of the coated paper in a print tester at an accelerating rate. The accelerated speed of the print wheel and the tack rating of the ink are adjusted to determine the strength of the coated paper sample at specific printing conditions. If the combination of print wheel speed and ink tack is great enough, then resulting negative forces create picking, which may appear as: white areas on the surfaces of the print wheel and coated paper sample, as blisters and textured areas on the surface of the coated paper sample, as delamination (surface layer removal) of the coated paper sample, or as tearing (complete strength failure) of the base paper sample.

Evaluation of the picking effect exhibited by selected paper substrates coated with any given type of paper coating composition can be used to quantify the binding strength and coating performance of that composition. Picking evalution is carried out by means of IGT pick testing according to standard methods of measurement by the Technical Association of the Pulp and Paper Industry (TAPPI) as well known in the art. A measure of dry and wet binding strength is provided by IGT Pick testing pursuant to TAPPI Useful Method UM 591, Surface Strength of Paper. The IGT dry pick strength measures the speed, in cm/sec, required to lift the paper coating off of the surface of a paper substrate strip when printed using an ink roller and standard conditions as described in UM 591. Higher IGT dry pick numbers indicate better resistance of the coated substrate to picking and hence higher strength coating performance.

The Dry Pick Value parameter used to characterize the coating compositions of the present invention is determined by carrying out dry pick testing of a specific type of coated paper board substrate. Such a substrate is a 16 point uncoated bleached board from Western Michigan University.

The coating formulation used to treat this paper substrate is formulated as follows (expressed per 100 parts dry pigment):
100 parts No. 1 Clay;
0.1 parts FinnFix 10 CMC (carboxymethylcellu lose);,
0.1 parts Dispex N40V (sodium polyacrylate pigment dispersant),
17 parts Test Binder,
Composition pH adjusted to 8.5 w/ NH₄OH:H₂O (1:1) solution,
64% target solids.

The binder level in this formulation is selected to emulate commercial coating recipes. Wire wound rods are used to coat the bleached board at a target coating weight value of 5,443 kg / 278.71 m² (12 lbs. /3000 ft²). This coating weight is selected to mimic the bleached board market. The freshly coated boards are oven dried at 126,66°C (260°F) for 30 seconds and subsequently calendered at 4136854 Pa (600 psi) and 76,66°C (170°F) using 1 nip. The finished boards are allowed to sit for 24 hours under constant temperature and humidity conditions 22,22°C (72°F), 50% RH) before being tested for IGT pick resistance.

The Dry Pick Values as used herein are the values obtained from the dry pick testing of the coated boards as described above using an IGT Testing Systems AIC2-5 Printability Tester under conditions which include use of medium viscosity oil, 2 cm/sec, and 50 KgF. As noted above, the paper coating compositions of the present invention, when using the binder emulsions of the present invention, will exhibit Dry Pick Values in accordance with the above-described testing of at least 75, more preferably at least 90, and even more preferably of at least 100. Generally, the paper coating compositions of the present invention will exhibit Dry Pick Values of from 90 to 110.

The APE-free paper-coating compositions of the present invention, with their selected type of vinyl ester/ ethylene-based, APE-free binder emulsions, can provide coated paper products which comply with U.S. Food & Drug Administration (FDA) regulations concerning paper products that can be used in contact with food. In particular, FDA regulations embodied in 21 CFR §176.170 and 21 CFR §176.180 indicate the types of paper coating composition components, including components of polymers used in such compositions, which can be utilized to coat paper for eventual use with food products. The binder emulsions and coating compositions herein can be formulated from materials which comply with these FDA paper coating for food contact regulations.

### EXAMPLES

The latex binder emulsions of the present invention, and the performance of such emulsions in the paper coating compositions herein, are illustrated by the following Examples:

### Example 1

An aqueous binder latex emulsion is prepared in the following manner:

In 3190 g of demineralized water, 115 g of a 20% active solution of sodium dodecylbenzenesulfonate, 234 g of a 65% active solution of a fatty alcohol ethoxylate (30 EO), 173 g of 30% sodium vinyl sulfonate and 13 g of sodium acetate are dissolved. As a redox catalyst, an iron salt is added.

After addition of 216 g of vinyl acetate and pressurization with 518 g of ethylene, the mixture is heated to 65 °C and polymerized at that temperature by slowly adding 455 g of a 4% solution of Bruggolite^{®} FF6 (sulfinic acid derivative reducing agent) and 320 g of a 3.2% solution of *t*-butyl hydroperoxide (TBHP). Concurrently a monomer mix is added containing 4140 g of vinyl acetate, 6 g of diallylphthalate and 9 g of maleic anhydride.

After start of polymerization, another 312 g of ethylene are added, keeping the pressure below 80 bar. The monomer mixture is added over a period of 4 hours with an initiator overrun of 30 min to ensure reduction of residual monomers. For the same purpose, the final emulsion is heated up to 85°C.

The resulting emulsion has a solids content of 54%, a viscosity of 80 cp and a pH of 5.8. As set forth in Table I hereinafter, the vinyl acetate/ethylene interpolymer formed in the emulsion comprises 16 pphm of ethylene, 0.175 pphm of maleic anhydride-derived co-monomer and 0.11 pphm of diallyl phthalate cross-linker.

### Examples 2 - 9

Using the same general procedures of Example 1, eight more binder latex emulsions are prepared, but with varying amounts of ethylene, maleic anyhydride and diallyl phthalate used in their preparation. In some of these additional emulsions which are comparative, only the maleic anhydride co-monomer or only the diallyl phthalate cross-linker is used. In others of these additional emulsions which are comparative, neither maleic anhydride nor diallyl phthalate is incorporated into the VAE interpolymer which is formed. A description of the co-monomer content in the interpolymers of each of the Examples 2 - 9 emulsions is also set forth hereinafter in Table 1.

### Example 10

An aqueous binder latex emulsion is prepared in the following manner involving use of a pre-emulsion:

In 2500 g of demineralized water, 62 g of a 20% active solution of sodium dodecylbenzenesulfonate, 158 g of a 65% active solution of an fatty alcohol ethoxylate (30 EO), 93 g of 30% sodium vinyl sulfonate and 13 g of sodium acetate are dissolved. As a redox catalyst, an iron salt is added.

After addition of 750 g vinyl acetate and pressurization with 500 g of ethylene, the mixture is heated to 65 °C and polymerized at that temperature by slowly adding 343 g of a 5% solution of Brüggolite^{®} FF6 and 345 g of a 6% solution of ammonium persulfate.

Concurrently, a monomer pre-emulsion is also added to the mixture. Such a pre-emulsion is made up by emulsifiying 3250 g vinyl acetate in a solution of 6 g of diallyl phthalate, 9 g of maleic anhydride, 154 g of a 20% active solution of sodium dodecylbenzenesulfonate, 67 g of a 65% active solution of an fatty alcohol ethoxylate (30 EO), and 73 g of 30% sodium vinyl sulfonate in 880 g of demineralized water.

After start of polymerization, another 500 g of ethylene are added, keeping the pressure below 80 bar. The monomer mixture is added over a period of 4 hours with an initiator overrun of 30 minutes to ensure reduction of residual monomers. For the same purpose, the final emulsion is heated up to 85°C.

The resulting emulsion has a solids content of 50.8%, a viscosity of 94 cp and a pH of 4.5. As set forth in Table I hereinafter, the vinyl acetate/ethylene interpolymer formed in the emulsion comprises 20 pphm of ethylene, 0.35 pphm of maleic anhydride-derived co-monomer and 0.22 pphm of diallyl phthalate cross-linker.

### Dry Pick Value Determination

The binder latex emulsions of Examples 1 through 10 are formulated into coating compositions as described above with respect to the definition of the Dry Pick Value parameter. These coating compositions are subsequently used to treat paper board substrates which are then tested for Dry Pick Value, all in the manner as also described above for the determination of Dry Pick Value as a measure of the effectiveness of the coating compositions.

Results of the Dry Pick Value testing of coating compositions made from the emulsions of Examples 1 through 10 are set forth in the following Table I: [Table I also includes Dry Pick Value determinations for a several commercially available coating compositions including those based on styrene-butadiene rubber (SBR), styrene-acrylate (SA), polyvinyl acetate (PVAc), and vinyl acetate ethylene (VAE) binders.]

**TABLE I**

| Dry Pick Evalution of Paper Coating Compositions | | | | | | |
|---|---|---|---|---|---|---|
| Example No. | Type | Maleic Anhydride (pphm) | Diallyl Phthalate (pphm) | Ethylene (pphm) | IGT Dry Pick Value | Std. Dev. |
| 1 | VAE | 0.175 | 0.11 | 16 | 78 | 5.05 |
| 2 | VAE | 0 | 0.22 | 12 | 41.6 | 3.71 |
| 3 | VAE | 0.35 | 0 | 20 | 91 | 6.36 |
| 4 | VAE | 0.35 | 0 | 12 | 35.8 | 5.81 |
| 5 | VAE | 0 | 0.22 | 20 | 63.67 | 2.58 |
| 6 | VAE | 0.35 | 0.22 | 12 | 75.83 | 4.54 |
| 7 | VAE | 0.35 | 0.22 | 20 | 102.4 | 4.34 |
| 8 | VAE | 0 | 0 | 12 | 26 | 2 |
| 9 | VAE | 0 | 0 | 20 | 26 | 2 |
| 10 | VAE | 0.35 | 0.22 | 20 | 132 | 9.4 |
| Comp | SBR | - | - | - | 109.83 | 5.91 |
| Comp | SA | - | - | - | 100.15 | 8.56 |
| Comp | PVAc | unknown | unknown | - | 49.92 | 7.67 |
| Comp | VAE | - | - | - | 63.8 | 6.87 |

The Table 1 data indicate that latex binder emulsions based on VAE interpolymers containing both maleic anhydride co-monomer and diallyl phthalate cross-linker can be used in paper coating compositions which provide especially desirable IGT Dry Pick performance. Such dry pick performance is shown in comparison with commercial VAE or polyvinyl acetate emulsion binders as well as with VAE binder emulsions with interpolymers which do not comprise the requisite amounts of these two additional polymerization components.

Binders with the requuisite amount of the two additional co-monomers provide paper coating compositions which, in fact, compare favorably in dry pick performance to coating compositions containing VAE binders with high ethylene content as well as to coating compositions containing conventional styrene-based binders.

### Example 11

Using the same general procedures of Example 1, another binder emulsion is prepared which utilizes acrylic acid instead of maleic anhydride as the unsaturated acidic co-monomer. The interpolymer formed in this emulsion comprises 20 pphm of ethylene, 0.22 pphm of diallyl phthalate and 0.51 pphm of acrylic acid. (This amount of acrylic acid is an equimolar amount of acrylic acid to 0.35 pphm of maleic anhydride as used in Example 7.) This acrylic acid-based Example 11 binder emulsion exhibits a Dry Pick Value of 128 with a standard deviation of 20.2.

## Claims

1. A surfactant-stabilized latex emulsion comprising a vinyl ester interpolymer colloidally dispersed in an aqueous medium, the interpolymer comprising:
(a) from 73.5 to 87.85 pphm of a vinyl ester of an alkanoic acid having 1 to 13 carbon atoms interpolymerized with the following co-monomers:
(b) from 12 to 25 pphm of ethylene;
(c) from 0.1 to 1.0 pphm of an ethylenically unsaturated C₃ -C₁₀ mono- or dicarboxylic acid or half ester of such dicarboxylic acid with a C₁ -C₁₈ alkanol; and
(d) from 0.05 to 0.5 pphm, and preferably from 0.10 to 0.15, of a polyethylenically unsaturated co-monomer selected from the group consisting of triallyl cyanurate, triallyl isocyanurate, diallyl maleate, diallyl fumarate, divinyl benzene and diallyl phthalate;
wherein said latex emulsion is stabilized with anionic and/or nonionic emulsifiers which are substantially free of alkylphenol ethoxylate surfactants.

2. An emulsion according to Claim 1 wherein the interpolymer formed in the emulsion comprises from 78 to 85 pphm of vinyl acetate; from 18 to 22 pphm of ethylene and from 0.2 to 0.5 pphm of an unsaturated di-carboxylic component selected from the group consisting of maleic acid and maleic anhydride.

3. An emulsion according to Claim 1 or Claim 2 wherein the emulsion is stabilized with an ethoxylated nonionic surfactant.

4. An emulsion according to any of Claims 1 to 3 which has a solids content of from 40 wt% to 70 wt%.

5. An emulsion according to any of Claims 1 to 4 which exhibits a Dry Pick Value of at least 75.

6. An emulsion according to any of Claims 1 to 5 wherein the interpolymer therein comprises only monomeric components which are permitted by the 21 CFR §176.170 and 21 CFR §176.180 regulations of the U.S. Food & Drug Administration for use in coating compositions suitable for application to and treatment of paper substrates to be used for contact with food.

7. A pigmented paper coating composition comprising an aqueous, surfactant-stabilized, interpolymer latex binder, pigment and sufficient alkali to achieve a pH of 6 to 10, the latex binder having dispersed therein an interpolymer comprising:
(a) from 73.5 to 87.85 pphm of a vinyl ester of an alkanoic acid having 1 to 13 carbon atoms interpolyermized with the following co-monomers:
(b) from 12 to 25 pphm of ethylene;
(c) from 0.10 to 1.0 pphm of an ethylenically unsaturated C₃ -C₁₀ mono- or dicarboxylic acid or half ester of such dicarboxylic acid with a C₁ -C₁₈ alkanol; and
(d) from 0.05 to 0.5 pphm, and preferably from 0.10 to 0.15 pphm, of a polyethylenically unsaturated co-monomer selected from the group consisting of triallyl cyanurate, triallyl isocyanurate, diallyl maleate, diallyl fumarate, divinyl benzene and diallyl phthalate;
wherein said latex binder is stabilized with anionic and/or nonionic emulsifiers which are substantially free of alkyl phenol ethoxylate surfactants.

8. A coating composition according to Claim 7 wherein the interpolymer of the latex binder comprises from 78 to 85 pphm of vinyl acetate; from 18 to 22 pphm of ethylene and from 0.2 to 0.5 pphm of an unsaturated di-carboxylic component selected from the group consisting of maleic acid and maleic anhydride.

9. A coating composition according to Claim 7 or Claim 8 wherein the binder latex is stabilized with an ethoxylated nonionic surfactant.

10. A coating composition according to any of Claims 7 to 9 wherein the pigment is selected from the group consisting of clay, calcium carbonate, titanium dioxide, blanc fixe, lithopone, zinc sulfide, plastic pigments and combinations of said pigments.

11. A coating composition according to any of Claims 7 to 10 which comprises 100 parts pigment containing 65-100 parts clay and 0-35 parts secondary pigment; 0.01-0.5 parts dispersing or stabilizing agent; 3-30 parts interpolymer latex solids; 0-25 parts co-binder; and sufficient water to provide a solids content of from 40 wt% to 70 wt%.

12. A coating composition according to any of Claims 7 to 11 which contains only components which are permitted by the 21 CFR §176.170 and 21 CFR §176.180 regulations of the U.S. Food & Drug Administration for use in coating compositions suitable for application to and treatment of paper substrates to be used for contact with food.

13. A pigmented paper coating composition comprising an aqueous surfactant stabilized interpolymer latex binder, pigment and sufficient alkali to achieve a pH of 6 to 10, the latex binder having dispersed therein an interpolymer comprising:
(a) a major amount of a vinyl ester of an alkanoic acid having 1 to 13 carbon atoms interpolyermized with minor amounts of the following co-monomers:
(b) ethylene;
(c) an ethylenically unsaturated C₃ -C₁₀ mono- or dicarboxylic acid or half ester of such dicarboxylic acid with a C₁ -C₁₈ alkanol; and
(d) a polyethylenically unsaturated co-monomer selected from the group consisting of triallyl cyanurate, triallyl isocyanurate, diallyl maleate, diallyl fumarate, divinyl benzene and diallyl phthalate
wherein said ethylene, unsaturated mono- or di-carboxylic co-monomers and polyethylenically unsaturated co-monomers are all present in said interpolymer in amounts relative to each other which serve to impart to said paper coating composition an IGT Dry Pick Value of at least 75; and
wherein said latex binder is stabilized with anionic and/or nonionic emulsifiers which are substantially free of alkyl phenol ethoxylate surfactants.

14. A coating composition according to Claim 13 wherein the interpolymer of the binder latex comprises a polyethylenically unsaturated co-monomer selected from the group consisting of diallyl maleate and diallyl phthalate and wherein the ethylene; unsaturated mono- or di-carboxylic; and polyethylenically unsaturated co-monomers are all present within said interpolymer in amounts relative to each other which serve to impart to said paper coating composition an IGT Dry Pick Value of at least 90.

15. A paper substrate coated with from 1 g/m² to 30 g/m² of a coating composition according to any of Claims 7 to 14.

## Patentansprüche

1. Eine tensidstabilisierte Latexemulsion enthaltend ein in einem wässrigen Medium kolloidal verteiltes Vinylesterinterpolymer, das Interpolymer enthaltend:
(a) 73,5 bis 87,85 pphm eines Vinylesters einer Alkansäure mit 1 bis 13 Kohlenstoffatomen interpolymerisiert mit den folgenden Comonomeren:
(b) 12 bis 25 pphm Ethylen;
(c) 0,1 bis 1,0 pphm einer ethylenisch ungesättigten C₃-C₁₀-Mono- oder Dicarboxylsäure oder eines Halbesters einer solchen Dicarboxylsäure mit einem C₁-C₁₈-Alkanol; und
(d) 0,05 bis 0,5 pphm, und vorzugsweise 0,10 bis 0,15 eines polyethylenisch ungesättigten Comonomers ausgewählt aus der Gruppe bestehend aus Triallylcyanurat, Triallylisocyanurat, Diallylmaleat, Diallylfumarat, Divinylbenzol und Diallylphthalat;
worin besagte Latexemulsion mit anionischen und/oder nicht ionischen Emulgatoren stabilisiert ist, die im Wesentlichen frei von Alkylphenolethoxylat-Tensiden sind.

2. Eine Emulsion gemäß Anspruch 1, worin das in der Emulsion gebildete Interpolymer 78 bis 85 pphm Vinylacetat; 18 bis 22 pphm Ethylen und 0,2 bis 0,5 pphm einer aus der aus Maleinsäure und Maleinsäureanhydrid bestehenden Gruppe ausgewählten ungesättigten Dicarboxylkomponente enthält.

3. Eine Emulsion gemäß Anspruch 1 oder Anspruch 2, worin die Emulsion mit einem ethoxylierten nicht ionischen Tensid stabilisiert ist.

4. Eine Emulsion gemäß einem beliebigen der Ansprüche 1 bis 3, die einen Feststoffgehalt von 40 Gew.-% bis 70 Gew.-% aufweist.

5. Eine Emulsion gemäß einem beliebigen der Ansprüche 1 bis 4, die einen Trockenrupf-Wert (Dry Pick-Wert) von mindestens 75 aufweist.

6. Eine Emulsion gemäß einem beliebigen der Ansprüche 1 bis 5, worin das Interpolymer darin nur monomere Komponenten enthält, die von den 21 CFR §176.170- und 21 CFR §176.180-Verordnungen der US-amerikanischen Gesundheitsbehörde (U.S. Food & Drug Administration) zur Nutzung in Beschichtungszusammensetzungen, die geeignet sind für eine Anwendung auf und Behandlung von Papiersubstraten für die Verwendung im Kontakt mit Lebensmitteln erlaubt sind.

7. Eine pigmentierte Papierbeschichtungszusammensetzung enthaltend ein wässriges, tensidstabilisiertes Interpolymerlatexbindemittel, Pigment und ausreichend Alkali, um einen pH von 6 bis 10 zu erreichen, worin im Latexbindemittel ein Interpolymer verteilt ist, das enthält:
(e) 73,5 bis 87,85 pphm eines Vinylesters einer Alkansäure mit 1 bis 13 Kohlenstoffatomen interpolymerisiert mit den folgenden Comonomeren:
(f) 12 bis 25 pphm Ethylen;
(g) 0,10 bis 1,0 pphm einer ethylenisch ungesättigten C₃-C₁₀-Mono- oder Dicarboxylsäure oder eines Halbesters einer solchen Dicarboxylsäure mit einem C₁-C₁₈-Alkanol; und
(a) 0,05 bis 0,5 pphm, und vorzugsweise 0,10 bis 0,15 pphm eines polyethylenisch ungesättigten Comonomers ausgewählt aus der Gruppe bestehend aus Triallylcyanurat, Triallylisocyanurat, Diallylmaleat, Diallylfumarat, Divinylbenzol und Diallylphthalat,
worin besagtes Latexbindemittel mit anionischen und/oder nicht ionischen Emulgatoren stabilisiert ist, die im Wesentlichen frei von Alkylphenolethoxylat-Tensiden sind.

8. Eine Beschichtungszusammensetzung gemäß Anspruch 7, worin das Interpolymer des Latexbindemittels 78 bis 85 pphm eines Vinylacetats, 18 bis 22 pphm Ethylen und 0,2 bis 0,5 pphm einer aus der aus Maleinsäure und Maleinsäureanhydrid bestehenden Gruppe ausgewählten ungesättigten Dicarboxylkomponente enthält.

9. Eine Beschichtungszusammensetzung gemäß Anspruch 7 oder Anspruch 8, worin der Bindemittellatex mit einem ethoxylierten nicht ionischen Tensid stabilisiert ist.

10. Eine Beschichtungszusammensetzung gemäß einem beliebigen der Ansprüche 7 bis 9, worin das Pigment ausgewählt ist aus der Gruppe bestehend aus Tonerde, Calciumcarbonat, Titandioxid, Blanc Fix, Lithopon, Zinksulfid, Plastikpigmenten und Kombinationen besagter Pigmente.

11. Eine Beschichtungszusammensetzung gemäß einem beliebigen der Ansprüche 7 bis 10, welche 100 Teile Pigment enthaltend 65-100 Teile Tonerde und 0-35 Teile Sekundärpigment; 0,01-0,5 Teile Dispergier- oder Stabilisierungsmittel; 3-30 Teile Interpolymerlatexfeststoffe; 0-25 Teile Co-Bindemittel; und ausreichend Wasser enthält, um einen Feststoffgehalt von 40 Gew.-% bis 70 Gew.-% bereitzustellen.

12. Eine Beschichtungszusammensetzung gemäß einem beliebigen der Ansprüche 7 bis 11, welche nur Komponenten enthält, die von den 21 CFR §176.170- und 21 CFR §176.180-Verordnungen der US-amerikanischen Gesundheitsbehörde (U.S. Food & Drug Administration) zur Nutzung in Beschichtungszusammensetzungen, die geeignet sind für eine Anwendung auf und Behandlung von Papiersubstraten für die Verwendung im Kontakt mit Lebensmitteln erlaubt sind.

13. Eine pigmentierte Papierbeschichtungszusammensetzung enthaltend ein wässriges tensidstabilisiertes Interpolymerlatexbindemittel, Pigment und ausreichend Alkali, um einen pH von 6 bis 10 zu erreichen, worin im Latexbindemittel ein Interpolymer verteilt ist, das enthält:
(a) eine Hauptmenge eines Vinylesters einer Alkansäure mit 1 bis 13 Kohlenstoffatomen interpolymerisiert mit geringeren Mengen der folgenden Comonomere:
(b) Ethylen;
(c) eine ethylenisch ungesättigten C₃-C₁₀-Mono- oder Dicarboxylsäure oder einen Halbester einer solchen Dicarboxylsäure mit einem C₁-C₁₈-Alkanol; und
(b) ein polyethylenisch ungesättigtes Comonomer ausgewählt aus der Gruppe bestehend aus Triallylcyanurat, Triallylisocyanurat, Diallylmaleat, Diallylfumarat, Divinylbenzol und Diallylphthalat,
worin besagtes Ethylen, besagtes ungesättigtes Mono- oder Dicarboxylcomonomer und besagte polyethylenisch ungesättigte Comonomere alle in besagtem Interpolymer in Mengen relativ zueinander vorliegen, die dazu dienen, besagter Papierbeschichtungszusammensetzung einen IGT-Trockenrupf-Wert (IGT-Dry Pick-Wert) von mindestens 75 zu verleihen; und
worin besagtes Latexbindemittel mit anionischen und/oder nicht ionischen Emulgatoren stabilisiert ist, die im Wesentlichen frei von Alkylphenolethoxylat-Tensiden sind.

14. Eine Beschichtungszusammensetzung gemäß Anspruch 13, worin das Interpolymer des Bindemittellatex ein polyethylenisch ungesättigtes Comonomer enthält, das ausgewählt ist aus der aus Diallylmaleat und Diallylphthalat bestehenden Gruppe und worin das Ethylen; das ungesättigte Mono-oder Dicarboxylcomonomer; und die polyethylenisch ungesättigten Comonomere alle in besagtem Interpolymer in Mengen relativ zueinander vorliegen, die dazu dienen, besagter Papierbeschichtungszusammensetzung einen IGT-Trockenrupf-Wert (IGT-Dry Pick-Wert) von mindestens 90 zu verleihen.

15. Ein mit 1g/m² bis 30 g/m² einer Beschichtungszusammensetzung gemäß einem beliebigen der Ansprüche 7 bis 14 beschichtetes Papiersubstrat.

## Revendications

1. Emulsion de latex stabilisée par un tensio-actif comprenant un interpolymère d'ester de vinyle dispersé de façon colloïdale dans un milieu aqueux, l'interpolymère comprenant :
(a) de 73,5 à 87,85 parties par cent millions (ppcm) d'un ester de vinyle d'un acide alcanoïque ayant 1 à 13 atomes de carbone interpolymérisé avec les co-monomères suivantes :
(b) de 12 à 25 ppcm d'éthylène ;
(c) de 0,1 à 1,0 ppcm d'un acide mono- ou dicarboxylique en C₃-C₁₀ éthyléniquement insaturé ou d'un hémi-ester d'un tel acide dicarboxylique avec un alcanol en C₁-C₁₈ ; et
(d) de 0,05 à 0,5 ppcm, et de préférence de 0,10 à 0,15, d'un co-monomère polyéthyléniquement insaturé choisi dans le groupe consistant en le cyanurate de triallyle, l'isocyanurate de triallyle, le maléate de diallyle, le fumarate de diallyle, le divinyl benzène et le phtalate de diallyle ;
ladite émulsion de latex étant stabilisée par des émulsifiants anioniques et/ou non ioniques qui sont sensiblement exempts de tensio-actifs alkyl phénol éthoxylates.

2. Emulsion selon la revendication 1, dans laquelle l'interpolymère formé dans l'émulsion comprend de 78 à 85 ppcm d'acétate de vinyle ; de 18 à 22 ppcm d'éthylène et de 0,2 à 0,5 ppcm d'un composant dicarboxylique insaturé choisi dans le groupe consistant en acide maléique et anhydride maléique.

3. Emulsion selon la revendication 1 ou la revendication 2, dans laquelle l'émulsion est stabilisée par un tensio-actif non ionique éthoxylé.

4. Emulsion selon l'une quelconque des revendications 1 à 3, qui a une teneur en matières solides de 40 % en poids à 70 % en poids.

5. Emulsion selon l'une quelconque des revendications 1 à 4, qui présente une valeur d'arrachage à sec (« Dry Pick Value ») d'au moins 75.

6. Emulsion selon l'une quelconque des revendications 1 à 5, dans laquelle l'interpolymère dans celle-ci comprend seulement des composants monomériques qui sont autorisés par les règlements 21 CFR §176.170 et 21 CFR §176.180 de l'Agence américaine des produits alimentaires et médicamenteux (« U.S. Food & Drug Administration »), en vue de l'utilisation dans des compositions de couchage appropriées pour une application sur des, et un traitement de, substrats de papier devant être utilisés pour un contact avec les aliments.

7. Composition de couchage de papier pigmenté, comprenant un liant à base de latex d'interpolymère, aqueux, stabilisé par tensio-actif, un pigment et suffisamment d'alcali pour atteindre un pH de 6 à 10, le liant à base de latex contenant, à l'état dispersé, un interpolymère comprenant :
(a) de 73,5 à 87,85 ppcm d'un ester de vinyle d'un acide alcanoïque ayant 1 à 13 atomes de carbone interpolymérisé avec les co-monomères suivants :
(b) de 12 à 25 ppcm d'éthylène ;
(c) de 0,10 à 1,0 ppcm d'un acide mono- ou dicarboxylique en C₃-C₁₀ éthyléniquement insaturé ou d'un hémi-ester d'un tel acide dicarboxylique avec un alcanol en C₁-C₁₈ ; et
(d) de 0,05 à 0,5 ppcm, et de préférence de 0,10 à 0,15 ppcm, d'un co-monomère polyéthyléniquement insaturé choisi dans le groupe consistant en le cyanurate de triallyle, l'isocyanurate de triallyle, le maléate de diallyle, le fumarate de diallyle, le divinyl benzène et le phtalate de diallyle ;
ledit liant à base de latex étant stabilisé par des émulsifiants anioniques et/ou non ioniques qui sont sensiblement exempts de tensio-actifs alkyl phénol éthoxylates.

8. Composition de couchage selon la revendication 7, dans laquelle l'interpolymère du liant à base de latex comprend de 78 à 85 ppcm d'acétate de vinyle ; de 18 à 22 ppcm d'éthylène et de 0,2 à 0,5 ppcm d'un composant dicarboxylique insaturé choisi dans le groupe consistant en acide maléique et anhydride maléique.

9. Composition de couchage selon la revendication 7 ou la revendication 8, dans laquelle le liant à base de latex est stabilisé par un tensio-actif non ionique éthoxylé.

10. Composition de couchage selon l'une quelconque des revendications 7 à 9, dans laquelle le pigment est choisi dans le groupe consistant en l'argile, le carbonate de calcium, le dioxyde de titane, le blanc fixe, le lithopone, le sulfure de zinc, les pigments plastiques et les combinaisons desdits pigments.

11. Composition de couchage selon l'une quelconque des revendications 7 à 10, qui comprend 100 parties de pigment contenant 65-100 parties d'argile et 0-35 parties de pigment secondaire ; 0,01-0,5 partie d'agent dispersant ou stabilisant ; 3-30 parties de matières solides de latex d'interpolymère ; 0-25 parties de co-liant ; et suffisamment d'eau pour fournir une teneur en matières solides de 40 % en poids à 70 % en poids.

12. Composition de revêtement selon l'une quelconque des revendications 7 à 11, qui contient seulement des composants qui sont autorisés par les règlements 21 CFR §176.170 et 21 CFR §176.180 de l'Agence américaine des produits alimentaires et médicamenteux, en vue de l'utilisation dans des compositions de couchage appropriées pour une application sur des, et un traitement de, substrats de papier devant être utilisés pour un contact avec les aliments.

13. Composition de couchage de papier pigmenté, comprenant un liant à base de latex d'interpolymère, aqueux, stabilisé par tensio-actif, un pigment et suffisamment d'alcali pour atteindre un pH de 6 à 10, le liant à base de latex contenant, à l'état dispersé, un interpolymère comprenant :
(a) une quantité majeure d'un ester de vinyle d'un acide alcanoïque ayant 1 à 13 atomes de carbone interpolymérisé avec des quantités mineures des co-monomères suivants :
(b) l'éthylène ;
(c) un acide mono- ou dicarboxylique en C₃-C₁₀ éthyléniquement insaturé ou un hémi-ester d'un tel acide dicarboxylique avec un alcanol en C₁-C₁₈ ; et
(d) un co-monomère polyéthyléniquement insaturé choisi dans le groupe consistant en le cyanurate de triallyle, l'isocyanurate de triallyle, le maléate de diallyle, le fumarate de diallyle, le divinyl benzène et le phtalate de diallyle,
ledit éthylène, lesdits co-monomères mono- ou dicarboxyliques insaturés et lesdits co-monomères polyéthyléniquement insaturés étant tous présents dans ledit interpolymère dans des quantités relatives entre elles qui servent à conférer à ladite composition de couchage de papier une valeur d'arrachage à sec IGT (« IGT Dry Pick Value ») d'au moins 75 ; et
ledit liant de latex étant stabilisé par des émulsifiants anioniques et/ou non ioniques qui sont sensiblement exempts de tensio-actifs alkyl phénol éthoxylates.

14. Composition de couchage selon la revendication 13, dans laquelle l'interpolymère du latex liant comprend un co-monomère polyéthyléniquement insaturé choisi dans le groupe consistant en le maléate de diallyle et le phtalate de diallyle et dans laquelle l'éthylène ; les co-monomères mono- ou dicarboxyliques insaturés ; et les co-monomères polyéthyléniquement insaturés sont tous présents dans ledit interpolymère dans des quantités relatives entre elles qui servent à conférer à ladite composition de couchage de papier une valeur d'arrachage à sec IGT (« IGT Dry Pick Value ») d'au moins 90.

15. Substrat de papier revêtu par de 1 g/m² à 30 g/m² d'une composition de couchage selon l'une quelconque des revendications 7 à 14.
